# EUROPÄISCHE PATENTSCHRIFT

(11) **EP 3 737 850 B1**
(45) Veröffentlichungstag und Bekanntmachung des Hinweises auf die Patenterteilung: **18.09.2024**
(21) Anmeldenummer: 19700557.2
(22) Anmeldetag: 04.01.2019
(51) Int. Cl.: F02M 35/12, F02M 35/14, F02M 35/024, F04D 29/66, F04D 29/70, F02B 37/00

(54) **FILTERSCHALLDÄMPFER FÜR EINEN ABGASTURBOLADER EINER BRENNKRAFTMASCHINE**
FILTER MUFFLER FOR AN EXHAUST GAS TURBOCHARGER OF AN INTERNAL COMBUSTION ENGINE
FILTRE-AMORTISSEUR DE BRUIT POUR UN TURBOCOMPRESSEUR D'UN MOTEUR À COMBUSTION INTERNE

(30) Priorität: 10.01.2018 DE 102018100466
(43) Veröffentlichungstag der Anmeldung: 18.11.2020
(73) Patentinhaber: Turbo Systems Switzerland Ltd., 5400 Baden (CH)
(72) Erfinder: FELD, Heinz-Jürgen, 5524 Niederwil (CH); JOHO, Marcel, 5105 Auenstein (CH)
(74) Vertreter: Zimmermann & Partner Patentanwälte mbB
(86) Internationale Anmeldenummer: PCT/EP2019/050160
(87) Internationale Veröffentlichungsnummer: WO 2019/137854

(56) Entgegenhaltungen:
- EP-A1- 2 868 910
- DE-A1- 10 225 092
- DE-U1- 8 505 239
- US-A- 4 667 769
- US-A- 5 756 944

## Beschreibung

### TECHNISCHES GEBIET

Die Erfindung bezieht sich auf das Gebiet der Abgasturbolader für aufgeladene Brennkraftmaschinen. Insbesondere betrifft die Erfindung einen Filterschalldämpfer für eine Brennkraftmaschine mit einem Abgasturbolader. Ferner betrifft die Erfindung eine Brennkraftmaschine mit einem in der vorliegenden Offenbarung beschriebenen Filterschalldämpfer.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Im Betrieb des Abgasturboladers entstehen typischerweise vorwiegend im Verdichterrad Schallwellen unerwünscht hoher Amplitude, die durch den Luftansaugkanal an die Umgebung freigesetzt werden. Diese Schallwellen werden daher üblicherweise mittels eines Filterschalldämpfers gedämpft.

Aus dem Stand der Technik sind Filterschalldämpfer bekannt, die typischerweise auf der Ansaugseite eines Verdichters eingesetzt werden, der die Verbrennungsluft komprimiert und einem Verbrennungsmotor zuführt. Angetrieben wird ein derartiger Verdichter von der Abgasturbine eines Abgasturboladers.

Üblicherweise sind die Filterschalldämpfer derart ausgebildet, dass Umgebungsluft durch einen am Umfang eines Filterschalldämpfers angeordneten Filter in einen mit Dämpfungselementen ausgestatteten Innenraum des Filterschalldämpfers eingeleitet werden kann, anschließend an den Dämpfungselementen vorbei strömt, und dabei zum Verdichterrad, von dem entgegen der Luftströmung Schallwellen ausgehen, durch Leitelemente umgelenkt wird. Die Schalldämpfung erfolgt an den Dämpfungselementen dissipativ, indem die Schallenergie unmittelbar durch poröse oder faserige Absorptionsmaterialien, aus denen die Dämpfungselemente im Wesentlichen aufgebaut sind, in Wärme umgesetzt wird.

Beispielsweise ist in der Patentanmeldung EP 0 740 080 A2 ein Filterschalldämpfer beschrieben, der aus einem gegossenen Monoblock besteht, und in dessen strahlenförmigen Rippen mit Nuten die Dämpfungselemente angeordnet sind. Ein Filterrahmen, bestehend aus einem abnehmbaren Lochblechteil, umgibt den Filterschalldämpfer in der Art, dass die Dämpfungselemente gegen radiales Herausfallen gesichert werden. Das Lochblechteil ist mittels Verbindungselementen ringförmig um den Filterschalldämpfer angeordnet. Ein scheibenförmiges Dämpfungselement besteht aus vier Dämpfungssegmenten, die zusammengesetzt eine Ringfläche darstellen. Ein Absorptionselement wird von zwei gestanzten Lochblechen gehalten, und bildet so ein Dämpfungssegment, das in die Nuten der oben erwähnten Rippen des gegossenen Monoblocks radial eingeführt wird.

Aus dem DE8505239U1 ist ebenfalls ein Filterschalldämpfer bekannt.

Es hat sich herausgestellt, dass mit den aus dem Stand der Technik bekannten Filterschalldämpfer, insbesondere bei hohen Strömungs-geschwindigkeiten, noch keine optimale Schalldämpfung erzielt wird. Ferner hat sich herausgestellt, dass die konventionellen Filterschalldämpfer gewisse Nachteile hinsichtlich erforderlicher Bauraumgröße als auch hinsichtlich der der auftretenden Druckverluste aufweisen.

### KURZE DARSTELLUNG DER ERFINDUNG

Die Aufgabe der vorliegenden Erfindung besteht darin, einen Filterschalldämpfer bereitzustellen, der mindestens hinsichtlich einem der obengenannten Nachteile der aus dem Stand der Technik bekannten Filterschalldämpfer verbessert ist. Insbesondere besteht eine Aufgabe der vorliegenden Erfindung darin, einen Filterschalldämpfer bereitzustellen, der im Vergleich zu den aus dem Stand der Technik bekannten Filterschalldämpfer eine kompaktere Bauraumgröße aufweist. Eine weitere Aufgabe der vorliegenden Erfindung besteht darin, einen Filterschalldämpfer bereitzustellen, der ein verbessertes Design aufweist, um den Druckverlust bei Durchströmung des Filterschalldämpfers zu verringern.

Zur Lösung der obengenannten Aufgabe wird ein Filterschalldämpfer gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Filterschalldämpfer bereitgestellt, welcher ein Frontelement, ein Rückelement, und eine Vielzahl von Dämpfungselementen umfasst, die zwischen dem Frontelement und dem Rückelement angeordnet sind. Die Dämpfungselemente sind radial um eine Zentralachse des Filterschalldämpfers angeordnet, so dass jeweils zwischen benachbarten Dämpfungselementen ein Strömungskanal ausgebildet wird. Die jeweiligen abströmseitigen Enden der Dämpfungselemente weisen jeweils ein Diffusorelement auf, welches eine abströmseitige Verjüngung aufweist. Ein Winkel α zwischen zwei gegenüberliegenden Seiten des Diffusorelements, insbesondere der abströmseitigen Verjüngung, ist aus einem Bereich von 1° ≤ α ≤ 8° ausgewählt, so dass der Strömungskanal abströmseitig einen zunehmenden Strömungsquerschnitt aufweist.

Somit wird vorteilhafterweise ein Filterschalldämpfer bereitgestellt, der gegenüber den aus dem Stand der Technik bekannten Filterschalldämpfern verbessert ist. Insbesondere wird durch den erfindungsgemäßen Filterschalldämpfer ein Filterschalldämpfer bereitgestellt, der durch dessen Design, insbesondere durch das Design der Dämpfungselemente, derart ausgestaltet, dass Druckverluste bei Durchströmung des Filterschalldämpfers verringert werden können. Somit kann ein Filterschalldämpfer mit verbesserten Dämpfungseigenschaften bereitgestellt werden. Des Weiteren ist der erfindungsgemäße Filterschalldämpfer vorteilhafterweise derart ausgestaltet, dass dieser im Vergleich zu konventionellen Filterschalldämpfer kompakter, insbesondere kompakter in axialer Richtung, ausgeführt werden kann.

Gemäß einem weiteren Aspekt der Erfindung wird ein Abgasturbolader mit einem Filterschalldämpfer gemäß einer der hierin beschriebenen Ausführungsformen bereitgestellt, wobei der Filterschalldämpfer auf der Ansaugseite eines Verdichters des Abgasturboladers angeordnet ist. Somit kann vorteilhafterweise ein verbesserter Abgasturbolader bereitgestellt werden.

Gemäß einem weiteren Aspekt der Erfindung wird eine Brennkraftmaschine mit einem hierin beschriebenen Abgasturbolader bereitgestellt, so dass vorteilhafterweise eine verbesserte Brennkraftmaschine bereitgestellt werden kann.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische perspektivische Schnittansicht eines Filterschalldämpfers gemäß hierin beschriebenen Ausführungsformen, der auf einer Ansaugseite eines Verdichters angeordnet ist;
- Figur 2: eine schematische axiale Schnittansicht eines Filterschalldämpfers gemäß hierin beschriebenen Ausführungsformen; und
- Figur 3: einen vergrößerten Ausschnitt der axialen Schnittansicht des Filterschalldämpfers aus Figur 2.

### DETAILLIERTE BESCHREIBUNG DER FIGUREN

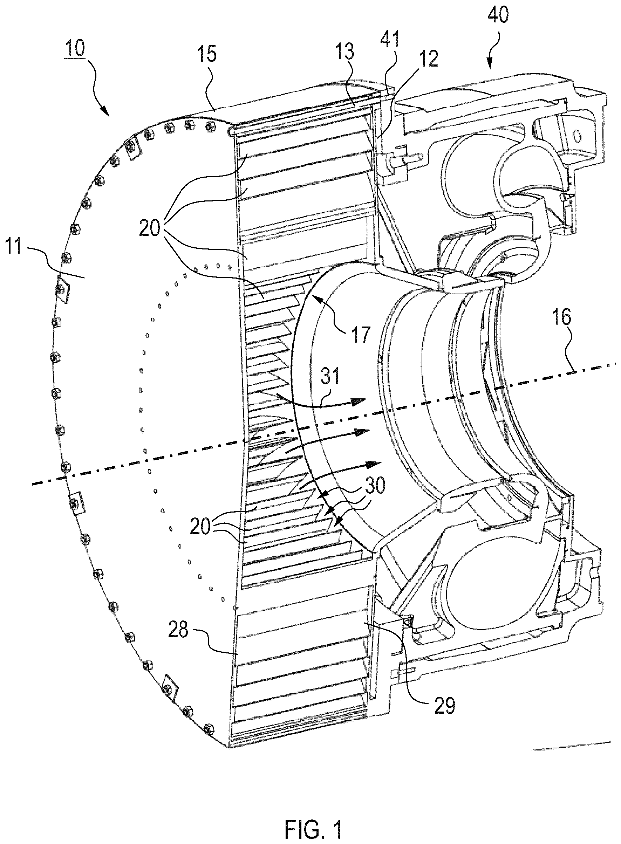

Figur 1 zeigt eine schematische perspektivische Schnittansicht eines Filterschalldämpfers 10 gemäß hierin beschriebenen Ausführungsformen. Insbesondere zeigt Figur 1 einen Filterschalldämpfer 10, der auf einer Ansaugseite eines Verdichters 40 angeordnet ist. Der dargestellte Filterschalldämpfer ist zylinderförmig ausgebildet.

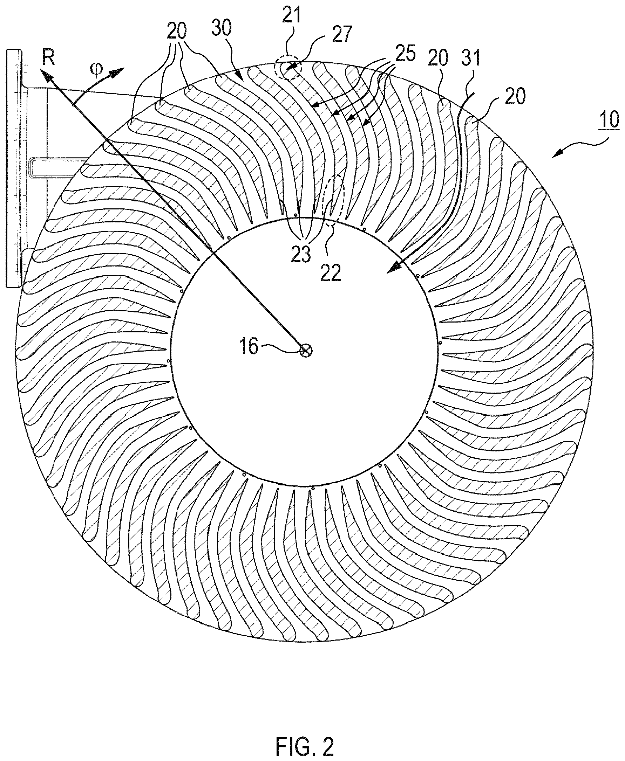

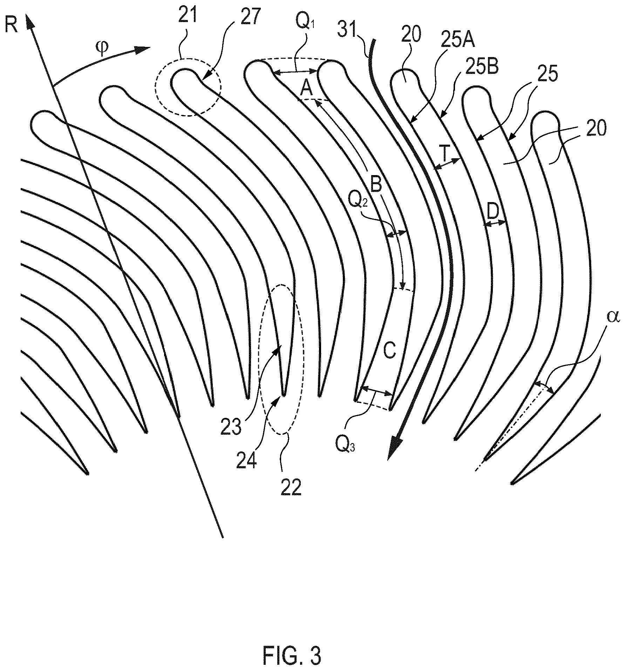

Wie beispielhaft in Figur 1 gezeigt ist, umfasst der erfindungsgemäße Filterschalldämpfer 10 ein Frontelement 11, ein Rückelement 12, und eine Vielzahl von Dämpfungselementen 20, die zwischen dem Frontelement 11 und dem Rückelement 12 angeordnet sind. Die Dämpfungselemente 20 sind radial um eine Zentralachse 16 des Filterschalldämpfers angeordnet, so dass jeweils zwischen benachbarten Dämpfungselementen ein Strömungskanal 30 ausgebildet wird. Wie beispielhaft in den Figuren 2 und 3 gezeigt ist, weisen die jeweiligen abströmseitigen Enden 22 der Dämpfungselemente 20 jeweils ein Diffusorelement 23 auf, welches eine abströmseitige Verjüngung aufweist. Typischerwesie ist ein Winkel α zwischen zwei gegenüberliegenden Seiten des Diffusorelements, insbesondere der abströmseitigen Verjüngung, aus einem Bereich von 1° ≤ α ≤ 8° ausgewählt. Demnach ist der Strömungskanal 30 zwischen benachbarten Dämpfungselementen derart ausgebildet, dass der Strömungskanal 30 abströmseitig einen zunehmenden Strömungsquerschnitt aufweist. Somit wird vorteilhafterweise ein Filterschalldämpfer bereitgestellt, mit welchem Druckverluste verringert werden können.

Zur Verbesserung der Dämpfungseigenschaften des Filterschalldämpfers, insbesondere zur Verringerung der Druckverluste, ist der Strömungskanal 30 gemäß einer Ausführungsform, die mit anderen hierin beschriebenen Ausführungsformen kombiniert werden kann, mindestens über 40% der Strömungskanallänge durch jeweilige Evolventen-Konturen 25 benachbarter Dämpfungselemente begrenzt, wie es beispielhaft in Figur 2 dargestellt ist. Die Dämpfungselemente des hierin beschriebenen Filterschalldämpfers können auch als Kulissen bezeichnet werden.

Zur Verbesserung der Dämpfungseigenschaften des Filterschalldämpfers, insbesondere zur Verringerung der Druckverluste, die jeweiligen abströmseitigen Enden 22 der Dämpfungselemente 20 jeweils ein Diffusorelement 23 aufweisen, welches eine abströmseitige Verjüngung aufweist, wie es beispielhaft in den Figuren 2 und 3 dargestellt ist.

Somit kann vorteilhafter Weise ein Filterschalldämpfer bereitgestellt werden, der gekrümmte Strömungskanäle (auch als Kulissenkanäle bezeichnet) die derart konfiguriert sind, dass die Durchströmung Geschwindigkeit möglichst konstant ist und keine Geschwindigkeitsspitzen aufweist. Dies ist insbesondere von Vorteil da Geschwindigkeitsspitzen quadratisch in den Druckverlust eingehen, sodass der erfindungsgemäße Filterschalldämpfer einen verringerten Druckverlust aufweist. Dies wirkt sich positiv auf das Dämpfungsverhalten bzw. auf den Bauraum des Filterschalldämpfers aus.

Gemäß einer Ausführungsform, die mit anderen hierin beschriebenen Ausführungsformen kombiniert werden kann, ist der Strömungskanal 30 zwischen benachbarten Dämpfungselementen mindestens über 50%, insbesondere mindestens über 65%, insbesondere mindestens über 70%, der Strömungskanallänge durch jeweilige Evolventen-Konturen 25 begrenzt. Dadurch kann die Durchströmung des Filterschalldämpfers mit konstanter Strömungsgeschwindigkeit weiter verbessert werden, sodass das Dämpfungsverhalten des Filterschalldämpfers weiter verbessert werden kann.

Das Frontelement 11 kann eine Frontplatte sein. Zum Beispiel kann die Frontplatte in Form einer Scheibe, insbesondere einer kreisrunden Scheibe, ausgebildet sein, wie es beispielhaft in Figur 1 dargestellt ist. Das Rückelement 12 kann eine Rückplatte sein, insbesondere eine Rückplatte mit einer zentralen Öffnung 17 als Luftaustrittsöffnung. Die Rückplatte kann in Form einer Scheibe, insbesondere einer kreisrunden Scheibe, mit zentraler Öffnung ausgebildet sein. Beispielsweise kann die Rückplatte um die zentrale Öffnung 17 herum ringförmig ausgestaltet sein, wie es in Figur 1 dargestellt ist. Die Strömungsrichtung 31 von den zwischen den Dämpfungselementen 20 ausgebildeten Strömungskanälen 30 durch die Luftaustrittsöffnung des Rückelements in den Verdichter ist in Figur 1 mit Pfeilen angedeutet.

Wie beispielhaft in den Figuren 1 und 2 dargestellt ist, sind die Dämpfungselemente 20 typischerweise gleichmäßig radial um die Zentralachse 16 des Filterschalldämpfers herum angeordnet, so dass jeweils zwischen benachbarten Dämpfungselementen ein Strömungskanal 30 ausgebildet wird, der zur Zentralachse 16 verläuft. Insbesondere verlaufen die jeweiligen Strömungskanäle zwischen benachbarten Dämpfungselementen von einem radial äußeren Einströmbereich des Filterschalldämpfers zu einem radial inneren Abströmbereich bzw. Ausströmungsbereich des Filterschalldämpfers.

Wie beispielhaft in Figur 1 dargestellt ist sind typischerweise ein erstes Ende 28 der jeweiligen Dämpfungselemente mit dem Frontelement 11 und ein zweites Ende 29 der jeweiligen Dämpfungselemente mit dem Rückelement 12 in Kontakt. Beispielsweise können die Dämpfungs-elemente 20 jeweils mittels eines Verbindungselements 13 zwischen dem Frontelement 11 und dem Rückelement 12 fixiert sein, wie es beispielhaft in oberen Teil von Figur 1 dargestellt ist. Typischerweise verbindet das Verbindungselement das Frontelement 11 mit dem Rückelement 12.

Beispielsweise kann das Verbindungselement 13 mit dem Rückelement 12 verschraubt sein. Alternativ kann das Verbindungselement auch durch eine entsprechende Öffnung im Rückelement 12 durchgeführt sein und mit einem Flansch 41 des Verdichtergehäuses verschraubt sein. Demnach wird die Struktur des Filterschalldämpfers durch die axiale Verbindung, insbesondere axiale Verschraubung, des Frontelements 11 mit dem Rückelement 12 über die Verbindungselemente 13 vorteilhafterweise versteift. Der Flansch 41 kann beispielsweise Teil eines am Verdichtergehäuse angebrachten Adapterrings sein. Der Adapterring ist typischerweise derart ausgestaltet, dass der Filterschalldämpfer daran montiert werden kann, beispielsweise über die hierin beschriebenen Verbindungselemente 13.

Wie beispielhaft in Figur 2 dargestellt ist, sind gemäß einer Ausführungsform, die mit anderen hierin beschriebenen Ausführungsformen kombiniert werden kann, die jeweilige Evolventen-Konturen 25 der Dämpfungselemente 20 zwischen einem radial äußeren einströmseitigen Ende 21 und einem radial inneren abströmseitigen Ende 22 der Dämpfungselemente ausgebildet. Die radiale Richtung ist in den Figuren 2 und 3 mit "R" gekennzeichnet.

Gemäß einer Ausführungsform, die mit anderen hierin beschriebenen Ausführungsformen kombiniert werden kann, weisen die jeweiligen einströmseitigen Enden 21 der Dämpfungselemente 20 bezüglich der jeweiligen Evolventen-Konturen eine Rückkrümmung 27 in Umfangsrichtung auf. Der Ausdruck "Rückkrümmung" ist so zu verstehen, dass die Rückkrümmung im Vergleich zu Krümmung der Dämpfungselemente eine entgegengesetzte Krümmung aufweist, wie es in den Figuren 2 und 3 dargestellt ist. Die Umfangsrichtung ist in den Figuren 2 und 3 mit die mit "ϕ" gekennzeichnet. Durch die Rückkrümmung der Dämpfungselemente bzw. der Kulissen kann vorteilhafterweise der Einströmungsdruckverlust reduziert werden. Ferner kann vorteilhafterweise eine radiale Einströmung in die Strömungskanäle zwischen den Kulissen erreicht werden. Somit kann der Druckverlust am Eintritt in den Filterschalldämpfer gesenkt werden, insbesondere auch dadurch, dass die Strömungsgeschwindigkeit typischerweise durch ein Filterblech 15 (auch als Anströmgitter bezeichnet) reduziert wird. Ferner kann durch eine Rückkrümmung vorteilhafterweise eine Versperrung im Einströmbereich verringert und/oder die Anströmgeschwindigkeit reduziert werden.

Wie in Figur 1 schematisch dargestellt ist, umfasst der Filterschalldämpfer gemäß einer Ausführungsform, die mit anderen hierin beschriebenen Ausführungsformen kombiniert werden kann, ein Filterblech 15 im Einströmbereich des Filterschalldämpfers. Typischerweise ist das Filterblech 15 am Umfang des Filterschalldämpfers angeordnet. Insbesondere ist das Filterblech 15 vorteilhafterweise kraftschlüssig mit dem Frontelement 11 und dem Rückelement 12 verbunden, wodurch vorteilhafterweise die Steifigkeit des Filterschalldämpfers erhöht werden kann. Das Filterblech ist typischerweise als Lochblech ausgestaltet, insbesondere als Lochblech mit hexagonalen Löchern bzw. Öffnungen. Typischerweise, hat das Filterblech einen freien Querschnitt von ca. 80%. Die Dicke des Lochblechs kann beispielsweise 1 mm betragen.

Gemäß einer Ausführungsform, die mit anderen hierin beschriebenen Ausführungsformen kombiniert werden kann, weisen die jeweiligen abströmseitigen Enden 22 der Dämpfungselemente 20 jeweils ein Diffusorelement 23 auf. Typischerweise weisen die Diffusorelemente 23 eine abströmseitige Verjüngung auf. Wie aus Figur 3 ersichtlich ist, verläuft die Verjüngung zu einer Abströmkante 24 des Diffusorelements 23 hin. Insbesondere kann die Verjüngung derart ausgestaltet sein, dass die Verjüngung an der Abströmkante zu einer Dickenreduktion des Dämpfungselements von höchstens 50% der Dicke T der Dämpfungselemente im Zwischenbereich B, insbesondere höchstens 25 % der Dicke T der Dämpfungselemente im Zwischenbereich B, insbesondere höchstens 15 % der Dicke T der Dämpfungselemente im Zwischenbereich B führt. Mit anderen Worten, die Dicke D_{DE} der Diffusorelemente 23 an der Abströmkante kann D_{DE} ≤ 0.5×T, insbesondere D_{DE} ≤ 0.25×T, insbesondere D_{DE} ≤ 0.15×T, sein. Somit kann vorteilhafterweise ein Ausström-druckverlust reduziert werden. Ferner kann ein Strömungsabriss bei Abströmung bzw. Ausströmung vorteilhafterweise im Wesentlichen vermieden werden.

Mit anderen Worten, gemäß einer Ausführungsform, die mit anderen hierin beschriebenen Ausführungsformen kombiniert werden kann, weisen die Dämpfungselemente 20 jeweils an ihrem zur Zentralachse 16 zeigenden Ende (d.h. im Abströmbereich) ein Diffusorelement 23 auf, wie es beispielhaft in den Figuren 2 und 3 gezeigt ist. Beispielsweise können die jeweiligen Diffusorelemente 23 jeweils mittels Befestigungselementen an dem Frontelement 11 und/oder dem Rückelement 12 befestigt sein. Als Befestigungselemente können unlösbare Verbindungen wie Schweiß-/Löt- oder Klebeverbindungen oder auch lösbare Verbindungen, insbesondere Schrauben, verwendet werden.

Wie aus den Figuren 1, 2 und 3 hervorgeht stellen die Diffusorelemente 23 üblicherweise die Kulissenaustritte bereit. Beispielsweise können die Diffusorelemente 23 aus Aluminium gefräst sein. Typischerweise sind die Diffusorelemente 23 spitzzulaufend, insbesondere dreiecksförmig, ausgebildet. Die zur Spitze verlaufenden Seiten der Diffusorelemente sind vorteilhafterweise gerade ausgebildet um ein Walzfräsen zu ermöglichen. Dies ermöglicht eine einfachere und kostengünstigere Herstellung.

Gemäß einer Ausführungsform, die mit anderen hierin beschriebenen Ausführungsformen kombiniert werden kann, ist ein Winkel α zwischen zwei gegenüberliegenden Seiten des Diffusorelements 23 aus einem Bereich von 1° ≤ α ≤ 8° ausgewählt. Zur Veranschaulichung ist der Winkel α zwischen zwei gegenüberliegenden Seiten eines Diffusorelements 23 in Figur 3 dargestellt. Beispielsweise kann der Winkel α = 6°±2°, insbesondere α = 4°±1°, sein.

Gemäß einer Ausführungsform, die mit anderen hierin beschriebenen Ausführungsformen kombiniert werden kann, sind die Dämpfungselemente 20 derart ausgestaltet, dass ein Querschnitt Q1 eines Einströmbereichs A der jeweiligen Strömungskanäle zwischen benachbarten Dämpfungselementen 20 in Strömungsrichtung 31 geringer wird, wie es beispielhaft in Figur 3 dargestellt ist. Somit kann der Druckverlust am Eintritt in den Filterschalldämpfer vorteilhafterweise gesenkt werden, da der Strömungseintrittsquerschnitt Q1 im Vergleich zum Hauptströmungsquerschnitt Q2 zwischen den Kulissen vergrößert ist

Gemäß einer Ausführungsform, die mit anderen hierin beschriebenen Ausführungsformen kombiniert werden kann, sind die Dämpfungselemente 20 derart ausgestaltet, dass ein Querschnitt Q2 der jeweiligen Strömungskanäle in einem Bereich, der durch Evolventen-Konturen 25 benachbarter Dämpfungselemente begrenzt ist, in Strömungsrichtung 31 konstant ist, wie es beispielhaft in Figur 3 dargestellt ist. Der Bereich, der durch die Evolventen-Konturen 25 benachbarter Dämpfungselemente begrenzt ist stellt den Zwischenbereich B zwischen Einströmbereich A und Ausströmungsbereich C dar. Durch einen konstanten Abstand der Kulissen im Zwischenbereich B, wie es beispielsweise in Figur 3 dargestellt ist, können vorteilhafterweise die Dämpfungseigenschaften des Filterschalldämpfers verbessert werden.

Gemäß einer Ausführungsform, die mit anderen hierin beschriebenen Ausführungsformen kombiniert werden kann, sind die Dämpfungselemente 20 derart ausgestaltet, dass ein Querschnitt Q3 eines Ausströmungsbereichs C der jeweiligen Strömungskanäle 30 zwischen benachbarten Dämpfungselementen 20 in Strömungsrichtung 31 größer wird, wie es beispielhaft in Figur 3 gezeigt ist. Dies führt vorteilhafterweise zu einer Reduktion des Ausströmdruckverlusts. Ferner kann vorteilhafterweise bei Abströmung bzw. Ausströmung ein Strömungsabriss im Wesentlichen vermieden werden.

Gemäß einer Ausführungsform, die mit anderen hierin beschriebenen Ausführungsformen kombiniert werden kann, ist ein Abstand D zwischen jeweilige Evolventen-Konturen benachbarter Dämpfungselemente 20 aus einem Bereich von 2 mm ≤ D ≤ 30 mm, insbesondere 5 mm ≤ D ≤ 25 mm, ausgewählt, wie es beispielhaft in Figur 3 dargestellt ist.

Wie beispielhaft in Figur 3 dargestellt ist, weisen die jeweiligen Dämpfungselemente 20 gemäß einer Ausführungsform, die mit anderen hierin beschriebenen Ausführungsformen kombiniert werden kann, eine erste Evolventen-Kontur 25A und eine dazu parallele zweite Evolventen-Kontur 25B auf. Beispielsweise kann die erste Evolventen-Kontur 25A konkav und die zweite Evolventen-Kontur 25B konvex sein, wie es beispielhaft in Figur 3 dargestellt ist. Ein Abstand T zwischen der ersten Evolventen-Kontur 25A und der zweiten Evolventen-Kontur 25b kann aus einem Bereich von 6 mm ≤ T ≤ 50 mm ausgewählt sein. Der Abstand T entspricht somit der Dicke der Dämpfungselemente im Zwischenbereich B.

Gemäß einer Ausführungsform, die mit anderen hierin beschriebenen Ausführungsformen kombiniert werden kann, umfassen die Dämpfungselemente jeweils ein Absorptionselement das typischerweise aus einem Dämpfungsmaterial besteht. Zum Beispiel kann das Dämpfungsmaterial ein Schaumstoffmaterial, ein Filz oder ein Vlies, insbesondere ein Polyestervlies, sein. Das Absorptionselement ist typischerweise zumindest teilweise von einem Dämpfungsblech umgeben. Insbesondere kann das Dämpfungsblech derart ausgebildet sein, dass ein Zwischenraum zwischen den Seitenwänden eines Dämpfungselements gebildet wird. In diesem Zwischenraum kann das Absorptionselement eingebracht sein.

Gemäß einer Ausführungsform, die mit anderen hierin beschriebenen Ausführungsformen kombiniert werden kann, besteht das hierein beschriebene Dämpfungsblech aus einem Lochblech mit einer Dicke von 0.8 oder 0.75 mm. Das Lochblech kann beispielsweise Löcher mit einem Durchmesser von 2 mm bis 5 mm aufweisen.

Wie aus den hierin beschriebenen Ausführungsformen hervorgeht wird vorteilhafterweise ein Filterschalldämpfer bereitgestellt, der gegenüber den aus dem Stand der Technik bekannten Filterschalldämpfern verbessert ist. Insbesondere wird durch den erfindungsgemäße Filterschalldämpfer ein Filterschalldämpfer bereitgestellt, welcher eine kompaktere Bauraumgröße, insbesondere in axialer Richtung, ermöglicht. Des Weiteren ist der erfindungsgemäße Filterschalldämpfer vorteilhafterweise durch dessen Design, insbesondere durch das Design der Dämpfungselemente bzw. Kulissen, derart ausgestaltet, dass Druckverluste bei Durchströmung des Filterschalldämpfers verringert werden können. Somit kann ein Filterschalldämpfer mit verbesserten Dämpfungs-eigenschaften bereitgestellt werden.

### BEZUGZEICHENLISTE

- **10**: Filterschalldämpfer
- **11**: Frontelement
- **12**: Rückelement
- **13**: Verbindungselement
- **15**: Filterblech
- **16**: Zentralachse
- **17**: zentrale Öffnung
- **20**: Dämpfungselement
- **21**: einströmseitiges Ende
- **22**: abströmseitiges Ende
- **23**: Diffusorelement
- **24**: Abströmkante
- **25**: Evolventen-Kontur
- **25A**: erste Evolventen-Kontur
- **25B**: zweite Evolventen-Kontur
- **30**: Strömungskanal
- **31**: Strömungsrichtung
- **40**: Verdichter
- **41**: Flansch des Verdichtergehäuses
- **A**: Einströmungsbereich
- **B**: Zwischenbereich
- **C**: Ausströmungsbereich
- **D**: Abstand D zwischen benachbarten Dämpfungselementen
- **T**: Dicke der Dämpfungselemente
- **Q₁**: Querschnitt des Einströmbereichs der jeweiligen Strömungskanäle
- **Q₂**: Querschnitt des Zwischenbereichs der jeweiligen Strömungskanäle
- **Q₃**: Querschnitt des Ausströmungsbereichs der jeweiligen Strömungskanäle
- **R**: radiale Richtung
- **ϕ**: Umfangsrichtung
- **α**: Winkel zwischen zwei gegenüberliegenden Seiten des Diffusorelements

## Patentansprüche

1. Filterschalldämpfer (10), umfassend:
- ein Frontelement (11),
- ein Rückelement (12), und
- eine Vielzahl von Dämpfungselementen (20), die zwischen dem Frontelement (11) und dem Rückelement (12) angeordnet sind,
wobei die Dämpfungselemente (20) radial um eine Zentralachse (16) des Filterschalldämpfers angeordnet sind, so dass jeweils zwischen benachbarten Dämpfungselementen ein Strömungskanal (30) ausgebildet wird, wobei die jeweiligen abströmseitigen Enden (22) der Dämpfungselemente (20) jeweils ein Diffusorelement (23) aufweisen, welches eine abströmseitige Verjüngung aufweist, und wobei ein Winkel α zwischen zwei gegenüberliegenden Seiten des Diffusorelements (23) aus einem Bereich von 1° ≤ α ≤ 8° ausgewählt ist **dadurch gekennzeichnet dass** der Strömungskanal (30) abströmseitig einen zunehmenden Strömungsquerschnitt aufweist.

2. Filterschalldämpfer (10) nach Anspruch 1, wobei der Strömungskanal (30) mindestens über 40% der Strömungskanallänge durch jeweilige Evolventen-Konturen (25) benachbarter Dämpfungselemente begrenzt ist.

3. Filterschalldämpfer (10) nach Anspruch 2, wobei die jeweilige Evolventen-Konturen (25) der Dämpfungselemente (20) zwischen einem radial äußeren einströmseitiges Ende (21) und einem radial inneren abströmseitigen Ende (22) der Dämpfungselemente ausgebildet sind.

4. Filterschalldämpfer (10) nach einem der Ansprüche 1 bis 3, wobei die jeweiligen einströmseitigen Enden (21) der Dämpfungselemente (20), insbesondere bezüglich der jeweiligen Evolventen-Konturen, eine Rückkrümmung (27) in Umfangsrichtung aufweisen.

5. Filterschalldämpfer (10) nach einem der Ansprüche 1 bis 4, wobei die Verjüngung zu einer Abströmkante (24) des Diffusorelements (23) hin verläuft und an der Abströmkante zu einer Dickenreduktion des Dämpfungselements von mindestens 50%, insbesondere mindestens 20 %, führt.

6. Filterschalldämpfer (10) nach einem der Ansprüche 1 bis 5, wobei die Dämpfungselemente (20) derart ausgestaltet sind, dass ein Querschnitt (Q1) eines Einströmbereichs der jeweiligen Strömungskanäle zwischen benachbarten Dämpfungselementen (20) in Strömungsrichtung (31) geringer wird.

7. Filterschalldämpfer (10) nach einem der Ansprüche 1 bis 6, wobei die Dämpfungselemente (20) derart ausgestaltet sind, dass ein Querschnitt (Q2) der jeweiligen Strömungskanäle in einem Bereich, der durch Evolventen-Konturen (25) benachbarter Dämpfungselemente begrenzt ist, in Strömungsrichtung (31) konstant ist.

8. Filterschalldämpfer (10) nach einem der Ansprüche 1 bis 7, wobei die Dämpfungselemente (20) derart ausgestaltet sind, dass ein Querschnitt (Q3) eines Ausströmungsbereichs der jeweiligen Strömungskanäle (30) zwischen benachbarten Dämpfungselementen (20) in Strömungsrichtung (31) größer wird.

9. Filterschalldämpfer (10) nach einem der Ansprüche 1 bis 8, wobei der Strömungskanal (30) mindestens über 50%, insbesondere mindestens über 65%, der Strömungskanallänge durch jeweilige Evolventen-Konturen (25) benachbarter Dämpfungselemente (20) begrenzt ist.

10. Filterschalldämpfer (10) nach einem der Ansprüche 2 bis 9, wobei ein Abstand D zwischen den jeweiligen Evolventen-Konturen benachbarter Dämpfungselemente aus einem Bereich von 2 mm ≤ D ≤ 30 mm, insbesondere 5 mm ≤ D ≤ 25 mm, ausgewählt ist.

11. Filterschalldämpfer(10) nach einem der Ansprüche 1 bis 10, wobei die jeweiligen Dämpfungselemente (20) eine erste Evolventen-Kontur (25A) und eine dazu parallele zweite Evolventen-Kontur (25B) aufweisen, wobei ein Abstand T zwischen der ersten Evolventen-Kontur und der zweiten Evolventen-Kontur aus einem Bereich von 6 mm ≤ T ≤ 50 mm ausgewählt ist.

12. Abgasturbolader mit einem Filterschalldämpfer gemäß einem der Ansprüche 1 bis 11, wobei der Filterschalldämpfer auf der Ansaugseite eines Verdichters des Abgasturboladers angeordnet ist.

13. Brennkraftmaschine mit einem Abgasturbolader gemäß Anspruch 12.

## Claims

1. Filter sound absorber (10), comprising:
- a front element (11),
- a rear element (12), and
- a multiplicity of damping elements (20) which are arranged between the front element (11) and the rear element (12),
the damping elements (20) being arranged radially around a central axis (16) of the filter sound absorber, with the result that a flow channel (30) is configured in each case between adjacent damping elements, the respective outflow-side ends (22) of the damping elements (20) each having a diffuser element (23) which has an outflow-side tapered portion, and an angle α between two opposite sides of the diffuser element (23) being selected from a range of 1° ≤ α ≤ 8°, **characterized in that** the flow channel (30) has an increasing flow cross section on the outflow side.

2. Filter sound absorber (10) according to Claim 1, the flow channel (30) being delimited at least over 40% of the flow channel length by way of respective involute contours (25) of adjacent damping elements.

3. Filter sound absorber (10) according to Claim 2, the respective involute contours (25) of the damping elements (20) being configured between a radially outer inflow-side end (21) and a radially inner outflow-side end (22) of the damping elements.

4. Filter sound absorber (10) according to one of Claims 1 to 3, the respective inflow-side ends (21) of the damping elements (20) having a rear curvature (27) in the circumferential direction, in particular with regard to the respective involute contours.

5. Filter sound absorber (10) according to one of Claims 1 to 4, the tapered portion running towards an outflow edge (24) of the diffuser element (23) and leading at the outflow edge to a thickness reduction of the damping element of at least 50%, in particular at least 20%.

6. Filter sound absorber (10) according to one of Claims 1 to 5, the damping elements (20) being configured in such a way that a cross section (Q1) of an inflow region of the respective flow channels between adjacent damping elements (20) becomes smaller in the flow direction (31).

7. Filter sound absorber (10) according to one of Claims 1 to 6, the damping elements (20) being configured in such a way that a cross section (Q2) of the respective flow channels is constant in the flow direction (31) in a region which is delimited by way of involute contours (25) of adjacent damping elements.

8. Filter sound absorber (10) according to one of Claims 1 to 7, the damping elements (20) being configured in such a way that a cross section (Q3) of an outflow region of the respective flow channels (30) between adjacent damping elements (20) becomes greater in the flow direction (31).

9. Filter sound absorber (10) according to one of Claims 1 to 8, the flow channel (30) being delimited at least over 50%, in particular at least over 65%, of the flow channel length by way of respective involute contours (25) of adjacent damping elements (20).

10. Filter sound absorber (10) according to one of Claims 2 to 9, a spacing D between the respective involute contours of adjacent damping elements being selected from a range of 2 mm ≤ D ≤ 30 mm, in particular 5 mm ≤ D ≤ 25 mm.

11. Filter sound absorber (10) according to one of Claims 1 to 10, the respective damping elements (20) having a first involute contour (25A) and a second involute contour (25B) which is parallel to the former, a spacing T between the first involute contour and the second involute contour being selected from a range of 6 mm ≤ T ≤ 50 mm.

12. Exhaust gas turbocharger with a filter sound absorber according to one of Claims 1 to 11, the filter sound absorber being arranged on the intake side of a compressor of the exhaust gas turbocharger.

13. Internal combustion engine with an exhaust gas turbocharger according to Claim 12.

## Revendications

1. Filtre-amortisseur de bruit (10), comprenant :
- un élément frontal (11),
- un élément arrière (12), et
- une pluralité d'éléments d'amortissement (20) qui sont agencés entre l'élément frontal (11) et l'élément arrière (12),
les éléments d'amortissement (20) étant agencés radialement autour d'un axe central (16) du filtre-amortisseur de bruit, de telle sorte qu'un canal d'écoulement (30) est réalisé respectivement entre des éléments d'amortissement voisins, les extrémités aval respectives (22) des éléments d'amortissement (20) présentant chacune un élément diffuseur (23) qui présente un rétrécissement aval, et un angle α entre deux côtés opposés de l'élément diffuseur (23) étant choisi dans une plage de 1° ≤ α ≤ 8°,
**caractérisé en ce que**
le canal d'écoulement (30) présente une section transversale d'écoulement croissante en aval.

2. Filtre-amortisseur de bruit (10) selon la revendication 1, dans lequel le canal d'écoulement (30) est délimité au moins sur 40 % de la longueur du canal d'écoulement par des contours en développante respectifs (25) d'éléments d'amortissement voisins.

3. Filtre-amortisseur de bruit (10) selon la revendication 2, dans lequel les contours en développante respectifs (25) des éléments d'amortissement (20) sont réalisés entre une extrémité radialement extérieure côté amont (21) et une extrémité radialement intérieure côté aval (22) des éléments d'amortissement.

4. Filtre-amortisseur de bruit (10) selon l'une quelconque des revendications 1 à 3, dans lequel les extrémités côté amont respectives (21) des éléments d'amortissement (20), notamment en ce qui concerne les contours en développante respectifs, présentent une courbure arrière (27) dans la direction circonférentielle.

5. Filtre-amortisseur de bruit (10) selon l'une quelconque des revendications 1 à 4, dans lequel le rétrécissement s'étend vers un bord aval (24) de l'élément diffuseur (23) et entraîne, au niveau du bord aval, une réduction d'épaisseur de l'élément d'amortissement d'au moins 50 %, notamment d'au moins 20 %.

6. Filtre-amortisseur de bruit (10) selon l'une quelconque des revendications 1 à 5, dans lequel les éléments d'amortissement (20) sont conçus de telle sorte qu'une section transversale (Q1) d'une zone amont des canaux d'écoulement respectifs entre des éléments d'amortissement (20) voisins est réduite dans la direction d'écoulement (31).

7. Filtre-amortisseur de bruit (10) selon l'une quelconque des revendications 1 à 6, dans lequel les éléments d'amortissement (20) sont conçus de telle sorte qu'une section transversale (Q2) des canaux d'écoulement respectifs est constante dans la direction d'écoulement (31) dans une zone qui est délimitée par des contours en développante (25) d'éléments d'amortissement voisins.

8. Filtre-amortisseur de bruit (10) selon l'une quelconque des revendications 1 à 7, dans lequel les éléments d'amortissement (20) sont conçus de telle sorte qu'une section transversale (Q3) d'une zone d'écoulement de sortie des canaux d'écoulement (30) respectifs entre des éléments d'amortissement (20) voisins augmente dans la direction d'écoulement (31).

9. Filtre-amortisseur de bruit (10) selon l'une quelconque des revendications 1 à 8, dans lequel le canal d'écoulement (30) est délimité au moins sur 50 %, notamment au moins sur 65 %, de la longueur du canal d'écoulement par des contours en développante respectifs (25) d'éléments d'amortissement voisins (20).

10. Filtre-amortisseur de bruit (10) selon l'une quelconque des revendications 2 à 9, dans lequel une distance D entre les contours en développante respectifs d'éléments d'amortissement voisins est choisie dans une plage de 2 mm ≤ D ≤ 30 mm, notamment 5 mm ≤ D ≤ 25 mm.

11. Filtre-amortisseur de bruit (10) selon l'une quelconque des revendications 1 à 10, dans lequel les éléments d'amortissement respectifs (20) présentent un premier contour en développante (25A) et un deuxième contour en développante (25B) parallèle au premier, une distance T entre le premier contour en développante et le deuxième contour en développante étant choisie dans une plage de 6 mm ≤ T ≤ 50 mm.

12. Turbocompresseur avec un filtre-amortisseur de bruit selon l'une quelconque des revendications 1 à 11, dans lequel le filtre-amortisseur de bruit est agencé sur le côté aspiration d'un compresseur du turbocompresseur.

13. Moteur à combustion interne avec un turbocompresseur selon la revendication 12.
